# EUROPEAN PATENT SPECIFICATION

(11) **EP 4 266 001 B1**
(45) Date of publication and mention of the grant of the patent: **14.10.2026**
(21) Application number: 22169205.6
(22) Date of filing: 21.04.2022
(51) Int. Cl.: G01B 11/10, G01B 11/12, G01B 11/245, G01B 11/30

(54) **MEASURING APPARATUS AND MEASURING METHOD**
MESSVORRICHTUNG UND MESSVERFAHREN
APPAREIL DE MESURE ET PROCÉDÉ DE MESURE

(43) Date of publication of application: 25.10.2023
(73) Proprietor: BBS Automation Blaichach GmbH, 87544 Blaichach (DE)
(72) Inventor: SPECKER, Michael, 87544 Blaichach (DE); MAURER, Martin, 87545 Burgberg (DE); KURSCHATKE, Roland, 87509 Immenstadt (DE)
(74) Representative: Dürr - Corporate IP

(56) References cited:
- KR-A- 20110 078 612
- US-A1- 2011 102 811
- US-A1- 2014 326 172
- US-A1- 2019 310 073

## Description

The present invention relates to a measuring apparatus for measuring test specimens, preferably test specimens having the general shape of a hollow cylinder. In particular, the invention relates to an apparatus allowing for a fast and accurate measurement of such specimens in large-scale or mass production thereof. More specifically the present invention relates to a measuring apparatus for measuring the shape of a rotor and/or a stator of an electric motor with short cycle times that are suitable for large-scale or mass production, e.g. in the automotive industry.

Assessing the shape of certain hollow test specimens remains a challenge, in particular when accurate measurements must be performed in short cycle times.

For example, when producing a rotor and/or a stator of an electric motor, it is common practice for quality control to check straightness, cylindricity and/or diameter dimensions of the rotor and the stator, respectively. Both components, the rotor and the stator, are usually assembled from a large number of sheet metal parts or laminations that are loosely stacked on top of each other, with each lamination being provided by a thin metal sheet part. The laminations are stacked on top of each other so that their respective contours are congruent with each other, thereby forming a rotationally symmetric hollow shape of the rotor or stator. Measuring the shape of these parts remains challenging in view of their small dimensions and the required accuracy, in particular when attempting to measure the shape of the lamination stack while the laminations are still movable with respect to each other.

There are several measuring apparatuses known in the art for performing such measurements. For example, it is known to use tactile measuring apparatuses, such as 3D Coordinate Measuring Machines available from Carl Zeiss AG, Oberkochen, Germany. Such machines comprise a measuring table and a movable mechanical sensing element provided with a measuring ball. For performing a tactile measurement, the test specimen, such as the rotor or stator, is placed statically on the measuring table and several measuring points are contacted by the measuring ball to determine straightness, cylindricity and diameter dimensions. The measurement is time consuming and thus difficult to integrate into high volume production. Moreover, fixation of stack on the measuring table may be required in order to prevent the shape from being influenced when contacted with the measuring ball.

Moreover, optical measuring apparatuses are known, e.g. as offered by Vici & C S.p.A., Santacangelo di Romagna, Italy, and Kirschenhofer Maschinen GmbH, Nersingen-Straß, Germany. These apparatuses comprise a vertically rotatable mandrel which can be introduced into an inner opening of the test specimen and a laser distance sensor which is oriented in horizontal direction to measure an outside shape of the test specimen while the mandrel is rotated. Thereby, the outer diameter and circularity in one measuring plane can be determined with the laser sensor. The measurement is then repeated in several measuring planes to assess cylindricity. The position of the inner opening of the specimen is determined via the position of the mandrel. This affects the possible measurement accuracy. Moreover, as found by the present inventors, fixation of a lamination stack (e.g., of a rotor or stator) with the mandrel may lead to a slight deformation of the stack, such that measurements on these apparatuses may yield results that are not fully repeatable. Finally, cycle times with these apparatuses are still believed to be too high for large-scale or mass production because each measuring plane needs to be precisely determined and set to be located entirely on a respective lamination. If a measuring plane overlaps with a gap formed between two consecutive laminations in the stack, the measuring results may be incorrect. Such gaps may occur, e.g., due to slight curvatures in the respective laminations resulting from the rolling direction of the metal sheet(s) from which the laminations have been cut and/or due to small chips resulting from a preceding laser-cutting process.

US 2011/0102811 A1 discloses an apparatus for measuring a cylindrically-shaped object. The apparatus comprises a measuring head, an inner surface measuring device being held by the measuring head, an outer surface measuring device being held by the measuring head, a displacement measuring device, a position calculation means and a dimension calculation means.

US 2019/0310073 A1 discloses a fixture for performing a gauging operation on a bevel gear product, the fixture comprising a base, a mount, a rotational position sensor, a plurality of measuring lasers coupled to the base, and a controller.

US 2014/0326172 A1 discloses a method for evaluating a vitreous silica crucible.

There is a need in the art for providing a measuring apparatus and method which at least partly overcomes the above described disadvantages.

More specifically, it is an object of the present invention to provide a measuring apparatus and/or a measuring method for measuring in an accurate and/or reliable manner at least one of straightness, cylindricity and/or diameter dimensions of test specimens, preferably of test specimens having the shape of a hollow cylinder with an arbitrary base geometry.

It is a further object of the present invention to provide a measuring apparatus and/or a measuring method for measuring in an accurate and reliable manner at least one of straightness, cylindricity and/or diameter dimensions of test specimens formed by a stack of sheets or laminations, such as a loose stack of laminations provided when producing a rotor or a stator of an electric motor.

It is a further object of the present invention to provide a measuring apparatus and/or a measuring method for providing any of the above-mentioned measurements in short cycle times, thereby allowing the apparatus or method, respectively, to be integrated into a large-scale or mass production of the test specimens.

These objectives are achieved, at least in part, by the apparatus and method according to the independent claims.

According to a first aspect, the present invention relates to a measuring apparatus for measuring a shape of a stack of sheets assembled for forming a rotor or a stator of an electric motor, the stack comprising a longitudinal axis, an outer peripheral surface extending along the longitudinal axis and an inner opening extending along the longitudinal axis, the inner opening forming an inner peripheral surface. The apparatus comprises a first sensor configured to measure a shape of the inner peripheral surface, wherein the first sensor preferably is a distance sensor designed for non-contact distance measurements, and a second sensor configured to measure a shape of the outer peripheral surface, wherein the second sensor preferably is a distance sensor designed for non-contact distance measurements. The sheets may also be referred to as "laminations" in the context of the present invention.

The stack of sheets preferably comprises multiple layers of sheet metal parts that are stacked on top of each other.

Preferably, the sheet metal parts are made of metal or ceramics or plastic, more preferably the sheet metal parts are made of electrical sheet or steel or aluminium, but the sheet metal parts may be made of any industrial applicable material.

The sheet thickness of each layer preferably is smaller than 1 mm, more preferably smaller than 0.5 mm. The stack of sheets preferably comprises several hundreds, preferably more than 300 sheet metal parts.

The sheet metal parts forming the stack of sheets preferably are intended to have all the same geometry. The geometry preferably comprises an inner contour enclosing an inner open space having a centre and an outer contour surrounding the sheet metal part. Thus, the sheet metal part may comprise an inner width defined as the shortest connection of two points of the inner contour on a straight line through the centre. Preferably, the sheet metal part is intended to be rotationally symmetric. The inner width may thus also be referred to as an inner diameter.

Preferably, the sheet metal parts are stacked congruently, i.e. with the outer and/or inner contours of the stacked sheet metal parts being congruent.

The longitudinal axis preferably extends through geometrical centres of at least the first and the last sheet metal part in the stack. Preferably, the stack is rotationally symmetric.

In the context of the present invention, a cylinder coordinate system {r; φ; z} may be relied upon when describing and/or measuring the shape of the stack. The height coordinate z may describe the stack's extension in the longitudinal direction while the geometry of each of the sheet metal parts at a certain height may be described by the radial and angular coordinates r, φ (e.g., the geometry of the outer and/or inner contour of the respective sheet metal part).

The inner and outer contours of the sheet metal parts forming the stack may be considered to be bounded by inner and outer enveloping surfaces, respectively. In certain applications, such as when measuring the shape of a rotor or stator component for an electric motor, it may be desired to assess the shape of said inner and outer enveloping surfaces as the shape of the inner and outer peripheral surfaces of the stack.

For example, the sheet metal parts may comprise a central opening and a plurality of outward projections configured. In a stack of sheets configured to form the rotor of an electric motor, the outward projections may form the poles of the rotor, as known in the art. In this case, the inner peripheral surface to be measured may correspond to the inner surface formed by the (intended to be congruent) central openings of the stacked sheet metal parts. The outer peripheral surface may correspond to outwardly facing surfaces of the outward projections facing away from the longitudinal axis, whereas it may be desired to ignore or disregard in the measurement openings or grooves formed between these outward projections. In other words, the outer peripheral surface to be measured may correspond to the outwardly facing surfaces of the rotor's pole heads. These outwardly facing surfaces may be considered to form, jointly, the above-mentioned outer enveloping surface. The outer enveloping surface may be intended to be cylindrical. Moreover, the outer enveloping surface may be intended to be circular in a cross section that is perpendicular to the longitudinal axis.

Alternatively, the sheet metal parts may comprise an outer peripheral surface and a plurality of inward projections. **In** a stack of sheets configured to form the stator of an electric motor, the inward projections may form the teeth of the stator, as known in the art.

In this case, the inner peripheral surface to be measured may correspond to inwardly facing surfaces of the inward projections facing towards the longitudinal axis, whereas it may be desired to ignore or disregard in the measurement openings or grooves formed between these inward projections. In other words, the inner peripheral surface to be measured may correspond to the inwardly facing surfaces of the stator's teeth. These inwardly facing surfaces may be considered to form, jointly, the above-mentioned inner enveloping surface. The inner enveloping surface may be intended to be cylindrical. Moreover, the inner enveloping surface may be intended to be circular in a cross section that is perpendicular to the longitudinal axis.

In other words, when measuring a stator, the inner peripheral surface may be considered to run through the end faces of the teeth facing towards the longitudinal axis of the stator. When measuring a rotor, the outer peripheral surface may be considered to run through the end faces of the pole heads facing away from the longitudinal axis of the rotor. It may not be relevant for the measurement (or even undesired) to assess the shape of grooves or openings formed between the teeth or pole heads, respectively.

Furthermore, in a stack of sheets to be measured, gaps may be formed between the individual sheets, e.g. due to the rolling direction of the sheet metal or due to chips from a preceding cutting process. In view of common narrow focus areas of measurement instruments, these gaps may be relatively wide, such as wider than 30 µm or wider than 50 µm. Therefore, the problem may arise that the measurement instrument may focus on the gap and thus performs distorted measurements. It may be desired for measurement results to not be influenced by these gaps.

As noted above, the apparatus of the present invention is preferably designed for measuring a shape of a stack of sheets. Shape in the context of the present invention preferably refers to the prescribed courses of the peripheral surfaces, e.g. ignoring grooves that are intended by the design of the component. In particular, it is preferred for the apparatus to be designed for measuring the geometry, preferably cylindricity, circularity and straightness as well as diameter dimensions of the inner and outer peripheral surfaces, preferably while ignoring the previously described gaps. As it is known in the art, measuring results for rotors and stators need to have high accuracy. Hence, it is preferred that the apparatus of the present invention is designed for measuring the shape of a stack of sheets as well as deviations within the shape with an accuracy that meets a component tolerance of less than +/-0.1 mm, preferably less than +/- 0.06 mm, more preferably less than +/- 0.03 mm.

Preferably, the inner opening has a diameter or width of between 30 mm and 400 mm, more preferably between 40 mm and 300 mm. Preferably, the inner opening has a diameter or width of less than 400 mm, more preferably less than 300 mm, even more preferably less than 100 mm, even more preferably less than 50 mm. The diameter or width of the inner opening may be defined by the smallest dimension intersecting the longitudinal axis in an arbitrary cross-section perpendicular to the longitudinal axis. Such dimensions are particularly preferred for forming rotors or stators for use in automotive industry, in particular in passenger car drivetrains.

The outer diameter or width of the stack is preferably between 50 mm to 600 mm, more preferably 150 mm to 400 mm. Herein, the outer width may be the maximum extension in an arbitrary cross-section perpendicular to the longitudinal axis. Preferably, the inner diameter or width of the stack is less than 200 mm, more preferably less than 120 mm smaller than the outer diameter or width.

Consequently, the inner and outer peripheral surfaces of the approximately tubular stack of sheets enclose a maximum wall thickness of preferably less than 200 mm, more preferably less than 120 mm. Preferably, the height of the stacks is limited as well, so the stacks preferably extend less than 500 mm, more preferably less than 300 mm in the direction of the longitudinal axis.

It is preferred that at least one of the first and the second sensor, more preferably the first and the second sensor, comprised in the measuring apparatus are either optical sensors, ultrasonic sensors, sensors for inductive distance measurement or air nozzles to determine the shape of the stack of sheets. In other words, preferably at least one of the first and the second sensor, more preferably the first and the second sensor are non-contact sensors (i.e., which do not contact the stack or specimen for measurement). Even more preferably, at least one of the first and second sensor, more preferably the first and the second sensor, comprised in the measuring apparatus are optical sensors for non-contact optical distance measurement, preferably laser sensors. Hence, it is possible to measure the shape at different / a large number of points with high accuracy and without contacting the test specimen and therefore risking to change the shape of the stack by contacting it with e.g. tactile measuring devices or other contacting devices (e.g., a pin extending into the inner opening).

Independent form the sensor types used, a focus area can be defined for each sensor, wherein the focus area may be defined as the specific area in which a measurement value is taken. Herein the focus area may also be referred to as a focus point. Preferably, the first and/or second sensors have focus areas or focus points with a diameter or width of 300 µm or larger, preferably 500 µm or larger, wherein the width is the smallest dimension of the focus area. Preferably the focus points of the first and/ or second sensor are adjustable. While it will be appreciated that the skilled practitioner, when trying to achieve an exact measurement, will generally attempt to use a small focus area, focus areas having these minimal dimensions have been found to be particularly advantageous in the context of the present invention because the influence of the above-mentioned gaps and/or grooves may be small or negligible in this case. Therefore, the gaps and/or grooves will not distort the measuring results, which may simplify and accelerate the further processing of the data resulting from the measurement. This is believed to be helpful for achieving low cycle times and/or high precision.

Preferably, the measuring apparatus is configured such that the focus points of the first and the second sensor are in a common focus plane perpendicular to the longitudinal axis, wherein the focus plane can have a thickness which preferably is less than 5 mm, more preferably less than 1 mm. Preferably, the focus points are within the focus plane on an imaginary straight line, more preferably an imaginary straight line intersecting the longitudinal axis. Moreover, it is preferred that at least a portion of the first and second measuring beams proximate the inner and outer peripheral surfaces, respectively, are arranged on the imaginary straight line, more preferably wherein the imaginary straight line intersects the longitudinal axis.

Preferably, the first sensor is configured to be at least partially introduced into the inner opening of the stack, wherein preferably the direction of introduction is approximately parallel to the longitudinal axis. Taking the preferred dimensions of the stack into account, the first sensor's maximum dimension perpendicular to the direction of introduction into the inner opening of the stack is preferred to be smaller than 45 mm, more preferably smaller than 40 mm, even more preferably smaller than 30 mm.

The measuring apparatus preferably is configured to hold and/or support the stack such that in at least one operation mode, preferably a measuring mode, the first sensor may be positioned at least partially within an area bounded by the inner peripheral surface and the second sensor may be positioned around the outer peripheral surface. Introducing the first sensor at least partially into the inner opening enables the apparatus to take measurement values directly on the inner peripheral surface. This is believed to improve the measuring results, in particular the determination of the shape of the inner opening and therefore the overall measurement accuracy as well.

Preferably, the measuring apparatus is configured to hold and/or support the stack in at least one operation mode, preferably an operation mode before or after the measuring mode, such that the first sensor is positioned at least partially in an area defined by an imaginary extension of the inner peripheral surface in the direction of the longitudinal axis. This may allow to exchange the stack (or other test specimen) in a horizontal and/or radial direction, e.g. after all necessary measurements have been performed successfully (e.g., automatically). This is especially advantageous if the measuring apparatus is used within a production line.

Preferably, the first sensor is installed such that the first measuring beam is emitted in a direction essentially parallel to the longitudinal axis. This is because commonly used sensors have a greater extension in their longitudinal direction than in their cross-sections. Herein, the sensor's longitudinal direction is the direction of the emitted measuring beam. By installing the first sensor with the sensor's longitudinal direction oriented parallel to the longitudinal axis, bigger and therefore cheaper sensors can be used.

Preferably, the first measuring beam emitted by the first sensor is deflected into an oblique, preferably perpendicular direction relative to the longitudinal axis.

In other words, a first portion of the first measuring beam may be emitted in a first direction and the beam may be deflected (e.g. by a mirror) so that a second portion of the first measuring beam is directed in a second direction. The second direction may be oblique to the first direction, e.g. perpendicular thereto. The first direction may be vertical and/or the second direction may be horizontal. Thereby, the second portion can be directed onto the inner peripheral surface.

Preferably, the first sensor (or, more generally, the apparatus) comprises a mirror or an optic fibre, wherein the mirror or optic fibre is arranged in the emission direction of the first measuring beam after a lens of the first sensor. Moreover, it is preferred that the first measuring beam is deflected by using the mirror or the optic fibre, respectively. With such a construction the first measuring beam is deflected preferably by at least 40°, more preferably by at least 60°, even more preferably by at least 80°. Preferably, the first measuring beam is deflected by approximately 90°. It is further preferred that the mirror or at least one end of the optic fibre is configured to be arranged at least partly in the inner opening, in order to achieve the above discussed advantages.

Preferably, the second sensor is installed such that the second measuring beam is emitted in a direction oblique, preferably perpendicular, to the longitudinal axis. Nevertheless, if the space around the stack was limited such that an installation of the second sensor might be advantageous in a direction parallel to the longitudinal axis, it would be possible to also install the second sensor in the same way as the first one and use optical components such as a mirror or an optic fibre to deflect the second measuring beam. Independent from the installation direction of the sensors it is preferred that the portions of the first and the second measuring beams adjacent the stack are parallel, more preferably generally coincide.

Preferably, the measuring apparatus comprises a support configured for holding the stack. The support preferably comprises a rotation axis. The support preferably provides a horizontal rotating surface configured to rotate around a rotation axis. The rotation axis may be vertical and/or substantially parallel with the longitudinal axis.

Preferably, the support comprises a calibration structure or a calibration mark. Such calibration structure may have an inner contour and/or an outer contour that is circular in a cross section taken perpendicular to the rotation axis. The calibration structure may be cylindrical. The calibration structure may be a ring. The calibration structure may form the horizontal rotating surface on which the stack is supported. More specifically, a top surface of the calibration structure may form the horizontal rotating surface. If a mark is used, the mark may be circular. Preferably, the calibration structure or a calibration mark is concentric with the rotation axis.

Such calibration structure or mark may be measured via the first and/or the second sensor at the beginning, during, or at the end of each measurement series, e.g. by taking a plurality of measurement points around a circumference of the calibration structure or mark. This may allow the apparatus to determine the position of the first and/or second sensors relative to the rotation axis. This information may be relied upon when analysing the measurement results.

The support preferably comprises bearings, more preferably air bearings, and/or adjusting screws. Air bearings and/or adjusting screws are believed to be helpful for ensuring an accurate horizontal orientation of the horizontal rotating surface when rotating and/or an accurate, e.g. vertical, orientation of the rotation axis.

The support is preferably configured to have the stack placed onto the horizontal rotating surface such that the rotation axis and the longitudinal axis are substantially parallel, more preferably such that the rotation axis and the longitudinal axis coincide. Although it is preferred to place the stack with respect to the rotation axis symmetrically onto the horizontal rotation surface, this is not always feasible in practice. Thus, it is preferred that the measuring apparatus is configured to place the stack, so that the longitudinal axis is close to the rotation axis. More precisely it is preferred that the stack is placed onto the horizontal rotating surface in a way that the rotation axis and the longitudinal axis intersect the horizontal rotating surface with the intersection points less than 5 mm, more preferably less than 1 mm, more preferably less than 0.3 mm, even more preferably less than 0.1 mm apart. Ensuring such a proper positioning, together with using two sensors on the apparatus, may allow, firstly, high measurement accuracy and, secondly, the limited positioning area may ensure that the first sensor can be at least partially introduced into the inner opening of the stack.

Preferably, the horizontal rotating surface is arranged such that the first sensor is positioned in an area above the horizontal surface and the second sensor preferably is spaced further from the rotation axis than the first sensor. Preferably, the first sensor is installed at a distance to the rotation axis in accordance with the diameter or width of the inner hole to be measured. For example, the distance to the rotation axis may be zero, so the first sensor is directly on the rotation axis. This may be beneficial for measuring stacks with a smaller inner diameter or width. However, the apparatus may be configured so that the distance of the first sensor from the rotation axis may be adjusted, e.g. in a range from 0 mm to 200 mm, e.g. in adjustable increments of 10 mm.

Preferably, at least the first sensor and/or the second sensor are mounted to move, preferably vertically, relative to the support. Preferably, the first sensor and/or the second sensor are connected to a measuring slide that is movable, preferably in a direction that is essentially parallel to the longitudinal axis. Alternatively or additionally, the support may be movable in a vertical direction and/or in a direction that is essentially parallel to the longitudinal axis of the stack when placed on the horizontal rotating surface.

Preferably, the measuring apparatus is configured to measure the stack while the stack is free-standing, preferably while the stack is free-standing on the horizontal rotating surface.

The measuring apparatus is configured for measuring the shape of the stack by following a substantially helical or entirely helical measuring path, e.g. by moving the sensors vertically while rotating the horizontal rotating surface. It is believed by the inventors that such helical measuring path provides a particularly fast and convenient measurement, especially for a determination of cylindricity.

Preferably, the measuring slide is movably supported on a fixedly installed mount. The mount preferably comprises air bearing guides for supporting the first and second sensors and/or the measuring slide. Preferably, the mount may be made of steel, stone or concrete. More preferably, the mount is made from granite. In this manner, it is believed that the first and second sensors or the measuring slide respectively, may be guided precisely, independent from external influences such as e.g. temperature and vibrations. Stone and, in particular, a granite block are believed to be particularly advantageous as the mount. The guides or bearings may be attached directly to the granite block to movably support the first and second sensors and/or the measuring slide.

Preferably, the measuring slide and/or at least the first sensor, preferably the first and the second sensor, are movable in horizontal direction to adapt the focus point(s) to the stack dimension. Preferably, by moving the first sensor and/or the measuring slide in the horizontal direction, the focus point of the first sensor is adjustable from a distance of 20 mm to a distance of 150 mm from the longitudinal axis. Preferably, the focus point of the second sensor is adjustable from a distance of 150 mm to a distance of 800 mm from the longitudinal axis.

Preferably, the measuring apparatus further comprises a control circuit which is configured to process at least one first sensor signal R₁ and at least one second sensor signal R₂ from the first and the second sensor, respectively. It is preferred that the first sensor signal indicates a radial dimension of the inner peripheral surface (or inner enveloping surface) and the second sensor signal indicates a radial dimension of the outer peripheral surface (or outer enveloping surface). Preferably, the control circuit is configured to further process at least one third signal providing a relative rotational angle ϕᵢ of the stack to the first and second sensor. Preferably, the angle ϕᵢ is the same for the first and the second sensor, thus only one signal ϕ₁ is to be processed. Preferably, providing several first, second and third sensor signals while rotating the stack around the support's rotation axis allows the control circuit to evaluate all obtained signals in relation to the rotation axis and therefore calculating the diameters and/or circularity of the inner and the outer peripheral surface at the currently measured cross section. It will be understood that these measurements could also be performed by not rotating the support surface but by rotating the first and second sensor around the stack if configuring the apparatus accordingly.

Preferably, the control circuit is configured to process at least one fourth signal indicating a relative vertical position Zᵢ of the first and/or the second sensor to the stack. Preferably, the control circuit can evaluate all, preferably four, signals necessary to determine cylindricity, straightness, circularity and diameter dimensions. The described configuration of the measuring apparatus and its control circuit may be especially advantageous to perform measurements by following the above described helical measuring path.

It is preferred that the measuring apparatus is configured to perform a measurement via at least the first and/or the second sensor in a time increment smaller than 5 ms, more preferably smaller than 3 ms, even more preferably smaller than 1 ms. Preferably, the apparatus is configured to assess at least one the relative rotation angle ϕᵢ and/or the at least one relative vertical position Zᵢ in a time increment smaller than 5 ms, more preferably smaller than 3 ms, even more preferably smaller than 1 ms. This may be helpful for reducing cycle times.

Preferably, the measurement deviation is less than 2/10, more preferably less than 1/10 of the stack's component tolerance.

Alternatively or additionally, the measurement deviation is less than 0.02 mm, more preferably less than 0.01 mm, more preferably less than 0.006 mm, even more preferably less than 0.003 mm. This may be advantageous for measuring stators and rotors for, e.g., the automotive industry.

Preferably, the measuring apparatus further comprises a device to load and/or unload the stack (or another test specimen) onto the measuring apparatus. In other words, the device may be configured to place the stack in the measuring area of the measuring apparatus, preferably onto the horizontal rotating surface, or to place it in an area outside the measuring area, preferably an area where the stack gets further transferred in a production line.

The device to load and/or unload the stack preferably comprises at least one gripper, more preferably at least two grippers. It is preferred that the two grippers are configured to rotate around a swivel axis, wherein the swivel axis preferably is parallel to the longitudinal axis and/or parallel to the vertical direction. Such a device is believed to be especially beneficial when installing the measuring apparatus in an automated production line and/or in order provide for an accurate placement of the stack onto the horizontal rotating surface.

The present invention further relates to a method for measuring a shape of a stack of sheets assembled for forming a rotor or a stator of an electric motor, the stack comprising a longitudinal axis, an outer peripheral surface extending along the longitudinal axis and an inner opening extending along the longitudinal axis, the inner opening forming an inner peripheral surface. The method preferably is performed with a measuring apparatus according to the description above. Any of the features described above for the measuring apparatus may also be implemented in the context of the method.

The method comprises the following steps:
i) providing a first stack such that the first sensor is positioned within an area bounded by the inner peripheral surface and the second sensor is positioned around the outer peripheral surface, preferably wherein the stack is placed onto a horizontal rotating surface;
ii) taking at least one reference measuring point;
iii) rotating the stack and an assembly comprising the first and/or second sensor relative to each other;
iv) moving the stack and the assembly comprising the first and/or second sensor relative to each other in a direction parallel to the longitudinal axis;
v) taking at least one measuring point with the first sensor and/or with the second sensor, preferably a plurality of measuring points, more preferably wherein the plurality of measuring points are taken with the first sensor and/or with the second sensor in time increments of less than 5 ms, preferably less than 3 ms, more preferably less than 1 ms.

Preferably, method steps iii) to v) are performed simultaneously.

Preferably, all of steps i) to v) are performed within 45 seconds, more preferably within 30 seconds. This is believed to be helpful for achieving short cycle times suitable for large-scale and mass production.

Preferably, the method additionally comprises a further step of:
vi) removing the first stack, preferably removing the first stack from the horizontal rotating surface

Preferably, all the steps i) to vi) are performed within 45 seconds, more preferably within 30 seconds.

Preferably, the measuring path of the first or the second sensor, more preferably the measuring path of the first and the second sensor, is substantially helical or entirely helical when taking the plurality of measurements according to step v).

While the apparatus is particularly advantageous for measuring the shape of a stack of sheets, it will be appreciated that such apparatus may also be configured for measuring other parts or test specimens, in particular test specimens comprising an inner and outer peripheral surface, as e.g. hollow cylinders of various cross sectional shapes. Thus, in the description above the terms "stack" or "stack of sheets" may always be replaced by the terms "test specimen", "test specimen comprising an inner and outer peripheral surface", or "hollow shape" in the context of the present invention. For example, such test specimen or hollow shape may comprise two end faces and a longitudinal axis extending therebetween, an outer peripheral surface, and an inner opening or blind hole extending along the longitudinal axis, the inner opening or the side wall of the blind hole forming an inner peripheral surface. The outer peripheral surface may be considered to be bounded by an imaginary outer enveloping surface whereas the inner peripheral surface may be considered to be bounded by an imaginary inner enveloping surface. The apparatus and method may be configured to measure the shape of said inner and outer enveloping surfaces.

In the following, preferred, non-limiting embodiments of the invention are described by way of example with reference to the following figures. These examples are schematic and nature and should not be considered to limit the scope of the present invention, which is solely defined by the appended claims. The figures show:
- Figure 1: a perspective view of a measuring apparatus according to a preferred embodiment,
- Figure 2: a perspective view of the apparatus of Figure 1 provided with a device for loading and/or unloading a stack,
- Figure 3: a detailed view of a measuring slide of the apparatus of Figure 1,
- Figure 4: a schematic cross section of a stator,
- Figure 5: a schematic cross section of a rotor.

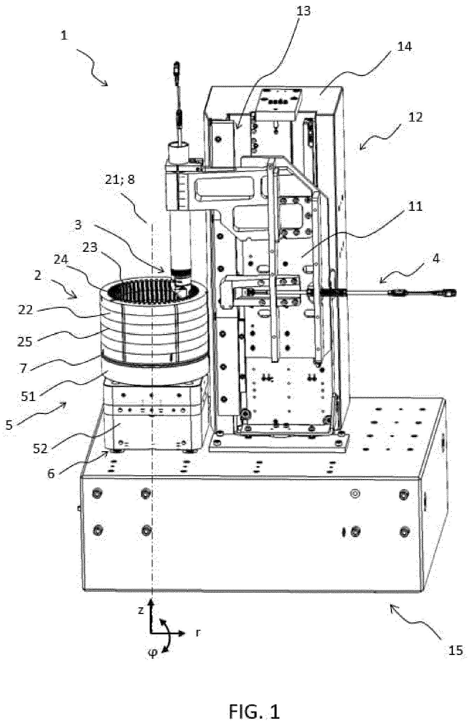

Figure 1 shows a perspective view of a measuring apparatus 1 according to a preferred, exemplary embodiment. The shown embodiment comprises a mount 12 next to a support 5, which may both be connected to a main base 15. The support 5 comprises a rotationally symmetric calibration ring 51 and is configured to rotate around a rotation axis 8 extending in vertical direction through the geometrical centre of the calibration ring 51.

The rotation axis 8 defines a direction z of a cylindrical coordinate system {r; φ; z}. In the embodiment shown, the calibration ring 51 is rotatably mounted on a substructure 52 of the support 5 and comprises a horizontal rotatable surface 7 extending in the radial direction r. In other words, the horizontal rotatable surface 7 is perpendicular to the rotation axis 8 and the calibration ring 51 together with its horizontal rotatable surface 7 is rotatable around the rotation axis 8.

The support 5 may comprise adjusting screws 6 to set the rotation axis 8 parallel to the vertical direction z and the support 5 may be supported on the main base 15 via air bearings.

The mount 12 in the embodiment of Figure 1 comprises a block (e.g., a granite block) as a mainstay 14. A measuring slide 11 is movably mounted to the mainstay 14 via air bearing guides 13. The air bearing guides 13 may be helpful to precisely guide the measuring slide 11 in the vertical direction z.

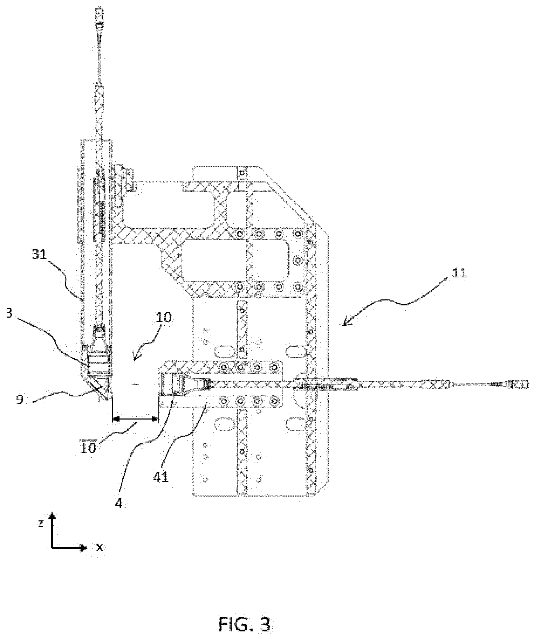

The measuring slide 11 is provided with a first sensor 3 and a second sensor 4. Preferably, both sensors 3, 4 are laser distance sensors. As it can be seen in Figure 1, the measuring slide 11 is configured to position the first sensor 3 in an area above the horizontal surface 7 and closer to the rotation axis 8 than the second sensor 4. Installation and orientation of the first sensor 3 and the second sensor 4 are described in more detail with reference to Figure 3 below.

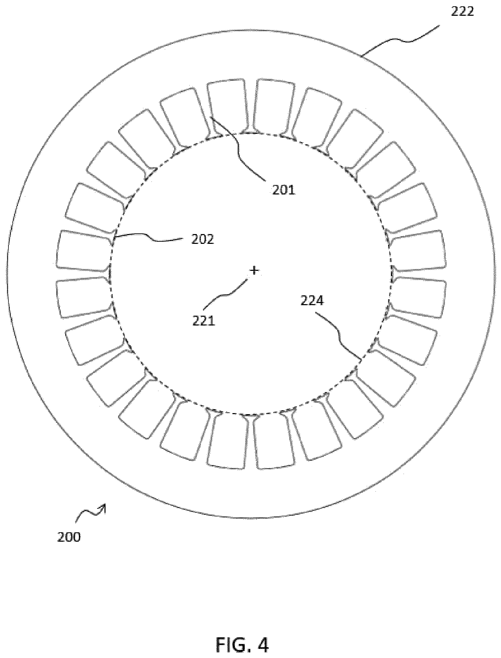

Figure 1 shows a stack 2 positioned on the horizontal rotating surface 7. The exemplary stack 2 as shown in Figure 1 is a stator for an electric motor. As known in the art, the cross section of such stator may be similar to the shape shown in Figure 4. However, the skilled reader will appreciate that also other stator shapes may be measured.

The stack 2 comprises a longitudinal axis 21, which in the shown embodiment generally coincides with the rotation axis 8. The stack 2 may further comprise deviations from an intended cylindrical shape, such as gaps 25 that may be formed in a generally circular manner between adjacent laminations of the stack 2. Even though these gaps 25 may be barely visible to the naked eye, they may be relatively large in view of precise measurements. When measuring an outer peripheral surface 22 of the stack, it may be desired to neglect the gaps 25. The outer peripheral surface 22 may thus be considered to form a generally cylindrical surface.

The stack 2 shown in Figure 1 also comprises an inner opening 23. Inside the inner opening 23, teeth of the stator may be formed. A plurality of grooves extending in the vertical direction z may be formed between the teeth, as generally known in stator design. When measuring an inner peripheral surface 24 of the stack 2, it may be desired to measure the shape formed by the inwardly facing surfaces of the teeth and/or to neglect the grooves. Furthermore, it may be desired to neglect the gaps 25. For an adequate assessment of the shape of the stack 2, it may be enough to determine the shape of the inner and the outer peripheral surfaces 22, 24 while ignoring the gaps 25 and/or the grooves.

As it is illustrated in Figure 1, the first sensor 3 may be configured to be introduced into the inner opening 23 of the stack 2 when the stack 2 is placed on the horizontal rotating surface 7. The first sensor 3 may be positioned at a distance from the rotation axis 8 that allows the sensor to determine precisely the radial distance to the inner peripheral surface 24.

The second sensor 4 may be positioned to precisely determine the radial distance to the outer peripheral surface 22.

The sensors 3, 4 may be adjusted to focus on the peripheral surfaces 22, 24, respectively with a measuring point having a relatively large measuring area. For example, the measuring area may have a diameter or width of approximately 500 µm. This may reduce distortion of the measuring results by the gaps 25 and/or the grooves and/or or other slight, non-problematic manufacturing inaccuracies 25 of the stack 2.

Rotating the stack and simultaneously performing measurements in solely one horizontal plane, it is only possible to determine diameters and/or circularity in one cross-section. However, within one measurement series, the shape of the whole stack is to be determined. Therefore, the measuring slide can be moved vertically while the measurement series is performed and measurements may be taken in several planes to also determine cylindricity and straightness. Due to the relatively large measuring areas focussed by the sensors, the second sensor 4 measures the outer peripheral surface 22 while ignoring inaccuracies such as, e.g., gaps 25 that may be present within the measuring area. Thus, it is possible to measure the outer peripheral surface 22 at arbitrary points and it is not necessary to adjust the focus point precisely to a cross-section where no gap or other inaccuracy 25 is located. The same may apply to the first sensor 3 in relation to the inner surface 24. Consequently, it is possible to measure the shape of the stack 2 while the stack 2 is rotated and simultaneously the vertical position z of the sensors 3, 4 may be changed. Hence, it is possible to measure the stack 2 following a helical measuring path. In particular, it is possible to perform a plurality of measurements while continuously rotating the stack 2 and changing the vertical position z of the sensors 3, 4.

Preferably, the measuring of one stack 2 is performed by firstly moving the measuring slide 11 into a first vertical position Z₁ ensuring that the first sensor 3 is spaced further apart from the horizontal rotating surface 7 than the height dimension of the stack 2 to measure. Secondly, the stack 2 is placed onto the horizontal rotating surface 7. Subsequently, the measuring slide 11 moves to a second vertical position Z₀ in which both sensors 3, 4 can calibrate themselves by focussing the calibration ring 51. In a further step, at least one measurement series is performed to determine the shape of the stack 2 while the stack 2 is being rotated. The measurement series may be performed (and the stack 2 may be rotated) while the measuring slide 11 moves upward and/or downward, e.g. downward to and/or upward from the calibration ring 51 along the stack's height. While the measuring slide 11 is moving, both sensors 3, 4 measure the distance to the respective peripheral surfaces 22, 24 of the stack 2 in small time increments, preferably smaller than 5 ms, more preferably smaller than 3 ms, even more preferably smaller than 1 ms. It is preferred, that each sensor performs at least 500, at least 1000 or at least 2000 measurements during one measurement series. Preferably, the sampling frequency is approximately 200 µs. Simultaneously, the rotation angles Φᵢ of the support 5 and the vertical positions Zᵢ of the measuring slide 11 may be determined in the same time increments and/or with the same sampling frequency and all four signals may be processed by a control circuitry (not shown). As soon as the measuring slide 11 reaches the first vertical position Z₁ again, the measurement series may be finished and the stack 2 may be removed from the horizontal rotating surface 7. Thus, it is possible to determine cylindricity, circularity, straightness and diameter dimensions within a time period of less than 30 seconds by following a helical measuring path.

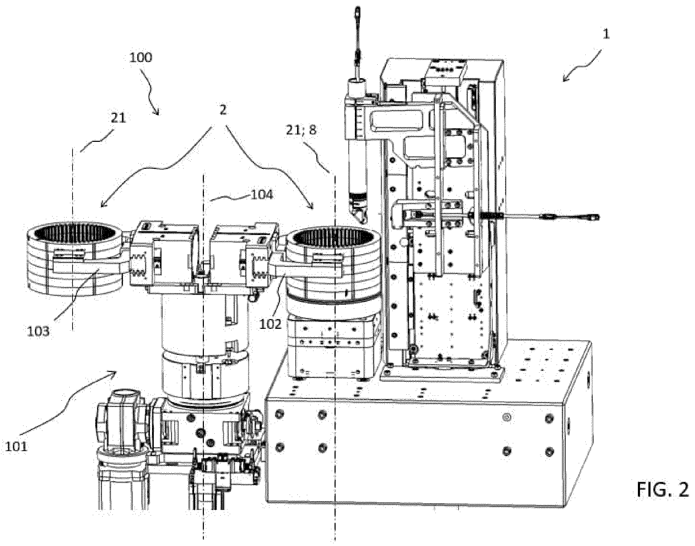

Figure 2 shows a perspective view of the apparatus of Figure 1 which, according to a preferred embodiment, is extended by an additional module 100 to load and unload the measuring apparatus. The module 100 comprises a device 101 which, in this embodiment, is installed next to the main base 15 but the device 101, in other embodiments, may also be installed on the main base 15. In the shown embodiment, the device 101 comprises two opposite grippers 102, 103. The grippers 102, 103 are designed in such a way that one gripper 102 or 103 can laterally grasp the stack 2, which is placed on the support 5, and remove it from the support 5, preferably by first lift it and subsequently moving it in a horizontal plane. Preferably, this functionality is given vice versa as well, so one gripper 102 or 103 clamping a stack 2 may move it onto the horizontal rotating surface 7 of the support 5.

In the embodiment of Figure 2, the grippers 102, 103 are rotatably, and preferably in a vertical direction movably, installed to the device 101 such that they can be rotated around a rotation axis 104 which preferably is substantially parallel to the rotation axis 8. Installing such device 101 between a feeding line or an intermediate position of the production line and the measuring apparatus enables time-efficient handling of the stacks 2. For example, for exchanging stacks 2 on the measuring apparatus, e.g. during line operation, the device may simultaneously grasp a first stack 2 that is on the support 5 and has already been measured with the first gripper 102 as well as a second stack 2 that is arranged in an area next to the measuring apparatus, e.g. on a feeding line, with the second gripper 103. Subsequently, both grippers 102, 103 of the device 101 may be moved upwards and the grippers 102, 103 may rotate around the rotation axis 104. Preferably the rotation angle is 360° divided by the number of grippers, in this embodiment the rotation angle therefore is 180°, but more than two grippers may be provided. Finishing the feeding process, both grippers 102, 103 may move down again and release the stacks 2. Thus, the second stack 2 is placed onto the horizontal surface 7 of the support 5 and the first stack 2 is fed back into the production process. After releasing the stacks 2, both grippers 102, 103 may move up above the stacks' height to enable a further lateral processing of the first stack 2.

As it will be understood by the skilled reader, the device 101 may also comprise just one gripper 102 or more than two grippers 102, 103 depending on the layout of the corresponding production line.

Thus, the grippers do not have to be rotatable but also can be laterally movable or several grippers may move around an oval or a polygon. However, it is preferred that the device 101 comprises at least one hydraulic circuit to operate the one or more grippers 102, 103 and/or to perform the rotational and vertical movements. Preferably, the at least one hydraulic circuit is electrically actuated. Nevertheless, pneumatical or mechanical operation of the one or more grippers 102, 103 is possible as well.

In Figure 3, a detailed view of the measuring slide 11 according to the embodiments of Figures 1 and 2 is shown. Additionally, a cartesian coordinate system {x; y; z} is introduced, wherein the direction z preferably is the same than in the cylindrical coordinate system of Figure 1 and characterizes a vertical direction. Consequently, the x-y-plane represents a horizontal plane.

As shown in Figure 3, the first sensor 3 may be coupled to a shaft 31 and this assembly may be attached to the measuring slide 11. The second sensor 4 may be coupled to a frame 41 and this assembly may be attached as well to the measuring slide 11. The attachment of the second sensor 4 is designed such that the second sensor 4 is horizontally orientated. Thus, in the shown embodiment, a measuring beam emitted by the second sensor 4 is directed in the direction x. In contrast, the first sensor 3 is coupled to the slide 11 such that the first sensor 3 is vertically oriented. Thus, in the shown embodiment, a measuring beam emitted by the first sensor 3 is directed in the direction z. The first sensor 3 is installed vertically in order to be able to measure stacks having a relatively small inner opening 23, such as an opening 23 with a diameter of less than 50 mm.

For measuring in a horizontal plane, the first sensor 3 or the apparatus 1 comprises a mirror 9 or an optical fibre (not shown). The mirror 9 may be arranged after a lens of the first sensor 3 in an emission direction of the first sensor's beam. The mirror 9 preferably is a glass mirror. Preferably, the mirror 9 is oriented in a 45° angle towards the x- and z-direction and preferably, the mirror can be adjusted by at least +/- 5°, more preferably by at least +/- 15°. Respectively, using an optic fibre it is preferred to redirect the light by 90° +/- 15°.

In the embodiment of Figure 3, the deflected portion of the measuring beam of the first sensor 3 and the measuring beam of the second sensor 4 both are in a common horizontal plane and both measuring beams are on one common straight line. The area between the shaft 31 and the frame 41, in which both measuring beams of the two sensors 3, 4 are directed, is indicated with numeral 10 in Figure 3. The shown measuring slide 11 preferably is attached to the mount 12 such that the common line of the measuring beams intersects the rotation axis 8. For measuring, the stack 2 it is placed on the measuring apparatus such that one part of its peripheral wall is in the area 10 between the first and second sensor 3, 4. The two sensors 3, 4 are preferably spaced apart such that the minimum distance 1̅0̅ between the shaft 31 and the frame 41 is approximately equal to the sum of the thickness of the stack's peripheral wall and the two focus distances of the first sensor 3 and the second sensor 4.

When the measuring apparatus 1 is used for large-series production, the positions of the first and the second sensor 3, 4 may be fixed. However, the optical distance sensors 3, 4 itself may be designed to allow an adjustment of their focus distance and focus points to allow for a certain variation in the specimens to be measured. Nevertheless, for use in smaller series or on single specimens, it is possible to provide a measuring slide 11 wherein either the position of the first sensor 3 or the position of second sensor 4, preferably the positions of both sensors 3, 4, can be adjusted in at least the x and/or z direction. Thus, an optimum distance can be selected for the respective specimen. As not only the wall-thicknesses of different specimens may vary but also the outer diameters of the specimens, a measuring apparatus 1 might be configured such that the whole measuring slide 11 is adjustable in relation to the support 5.

Figure 4 schematically shows a cross section 200 of a stator comprising several teeth 201 with end faces 202. The end faces 202 of the teeth 201 are facing towards a longitudinal axis 221. A dashed line 224 running through the end faces 202 indicates the inner peripheral surface to be measured. The surface to be measured neglects the spaces between the teeth. This surface may also be referred to as an inner enveloping surface. The cross section of the outer peripheral surface 222 coincides with the outer enveloping surface of the stator.

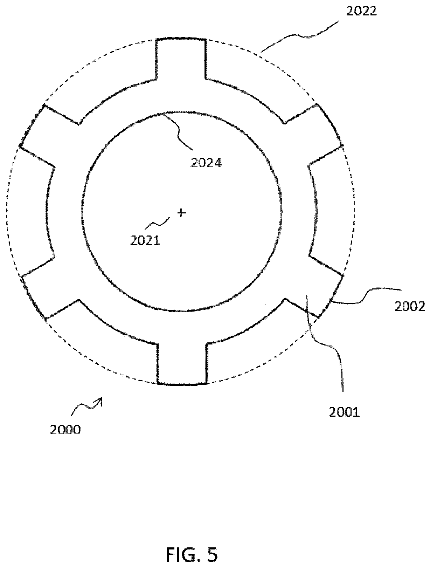

Figure 5 schematically illustrates a cross section 2000 of a rotor comprising six poles 2001 with end faces 2002. The end faces 2002 of the poles 2001 are facing away from a longitudinal axis 2021. In this embodiment, a dashed line 2022 running through the end faces 2002 illustrates an outer peripheral surface to be measured. This outer peripheral surface to be measured may neglect the spaces between adjacent poles. This surface may also be referred to as an outer enveloping surface. The cross section of the inner peripheral surface 2024 coincides with the inner enveloping surface of the stator.

The skilled reader will appreciate that the schematic drawings in Figures 4 and 5 may depict the spaces between the teeth/poles in a rather exaggerated manner.

## Claims

1. A measuring apparatus (1) for measuring a test specimen (2), in particular a shape of a stack (2) of sheets assembled for forming a rotor or a stator of an electric motor, the test specimen (2) comprising a longitudinal axis (21), an outer peripheral surface (22) extending along the longitudinal axis (21) and an inner opening (23) extending along the longitudinal axis (21), the inner opening (23) forming an inner peripheral surface (24), the apparatus (1) comprising:
a first sensor (3) configured to measure a shape of the inner peripheral surface (24), wherein the first sensor (3) preferably is a distance sensor designed for non-contact distance measurements,
a second sensor (4) configured to measure a shape of the outer peripheral surface (22), wherein the second sensor (4) preferably is a distance sensor designed for non-contact distance measurements, and
wherein the measuring apparatus (1) is configured for measuring the shape of the test specimen (2) using the first and second sensors (3, 4) by following a helical measuring path.

2. The measuring apparatus (1) according to claim 1 wherein the first sensor (3) is configured to be at least partially introduced into the inner opening (23) of the test specimen (2).

3. The measuring apparatus (1) according to any of the preceding claims, wherein the sensors (3, 4) are optical sensors with measuring beams having a measurement focus area with a diameter or width of 300 µm or larger, preferably 500 µm or larger.

4. The measuring apparatus (1) according to any of the preceding claims wherein the apparatus is configured to hold the test specimen (2) such that in at least one operation mode the first sensor (3) is positioned at least partially within an area bounded by the inner peripheral surface (24) and the second sensor (4) is positioned around the outer peripheral surface (22).

5. The measuring apparatus (1) according to any of the preceding claims comprising a support (5) configured for holding test specimen (2), preferably wherein the support (5) provides a horizontal rotating surface (7) onto which the test specimen (2) is placed for measuring, wherein the horizontal rotating surface (7) comprises a rotation axis (8) perpendicular to the horizontal surface (7).

6. The measuring apparatus (1) according to claim 5, wherein the apparatus (1) is configured to have the test specimen (2) placed onto the horizontal surface (7) such that the rotation axis (8) and the longitudinal axis (21) are substantially parallel and intersect the horizontal surface (7) with the intersection points less than 1 mm, preferably less than 0.3 mm, more preferably less than 0.1 mm apart, even more preferably the rotation axis (8) and the longitudinal axis (21) coincide, wherein the first sensor (3) is positioned in an area above the horizontal surface (7), and wherein the second sensor (4) is spaced further from the rotation axis (8) than the first sensor (3).

7. The measuring apparatus (1) according to any of claims 5 or 6, wherein the first and/or second sensors (3, 4) are mounted to move vertically relative to the support (5).

8. The measuring apparatus (1) according to any of the preceding claims, wherein the first sensor (3) is installed such that a first measuring beam is emitted by the first sensor (3) in a direction essentially parallel to the longitudinal axis (21) and/or the first measuring beam is redirected into an oblique, preferably perpendicular direction relative to the longitudinal axis (21).

9. The measuring apparatus (1) according to any of the preceding claims, wherein the first sensor (3) comprises a mirror (9) or an optic fibre, wherein the first sensor (3) emits a first measuring beam and the first measuring beam is redirected by using the mirror (9) or the optic fibre, respectively, preferably wherein
the mirror or optic fibre is arranged in the emission direction of the first measuring beam after a lens of the first sensor (3) and wherein
the mirror (9) or at least one end of the optic fibre is configured to be arranged in the inner opening (23); and/or
wherein the first measuring beam is deflected by at least 40°, more preferably by at least 60°, even more preferably by at least 80°.

10. The measuring apparatus (1) according to any of the preceding claims, configured to measure the test specimen (2) while the test specimen (2) is free-standing, preferably while test specimen (2) is free-standing on the horizontal surface (7).

11. The measuring apparatus (1) according to any of the preceding claims, wherein the apparatus is configured to perform a measurement via the first and/or second sensor (3, 4) and to assess the relative rotation angle (ϕ₁) and the relative vertical position (z₁) in a time increment smaller than 5 ms, preferably smaller than 3 ms, more preferably smaller than 1 ms.

12. A method for measuring a test specimen (2), in particular a shape of a stack (2) of sheets assembled for forming a rotor or a stator of an electric motor, the test specimen (2) comprising a longitudinal axis (21), an outer peripheral surface (22) extending along the longitudinal axis (21) and an inner opening (23) extending along the longitudinal axis (21), the inner opening (23) forming an inner peripheral surface (24), with a measuring apparatus (1) according to any of the preceding claims, the method comprising the following steps:
i) providing a first test specimen (2) such that the first sensor (3) is positioned within an area bounded by the inner peripheral surface (24) and the second sensor (4) is positioned around the outer peripheral surface (22);
ii) taking at least one reference measuring point;
iii) rotating the first test specimen (2) and an assembly comprising the first and/or second sensor (3, 4) relative to each other;
iv) moving the first test specimen (2) and an assembly comprising the first and/or second sensor (3, 4) relative to each other in a direction parallel to the longitudinal axis (21);
v) the first and/or second sensor (3, 4) taking a plurality of measuring points along a helical measuring path, preferably in time increments of less than 5 ms, preferably less than 3 ms, more preferably less than 1 ms;
vi) removing the first test specimen (2).

13. The method according to claim 12, wherein step iii), step iv), and step v) are performed simultaneously.

14. The method according to any of claims 12 or 13, wherein steps i) to v), preferably the steps i) to vi), are performed within 45 seconds, preferably within 30 seconds.

## Patentansprüche

1. Messeinrichtung (1) zum Messen eines Prüflings (2), insbesondere einer Form eines Stapels (2) von Blechen, die zum Bilden eines Rotors oder eines Stators eines Elektromotors zusammengefügt sind, wobei der Prüfling (2) eine Längsachse (21), eine Außenumfangsfläche (22), die sich entlang der Längsachse (21) erstreckt, und eine Innenöffnung (23), die sich entlang der Längsachse (21) erstreckt, umfasst, wobei die Innenöffnung (23) eine Innenumfangsfläche (24) bildet, wobei die Einrichtung (1) umfasst:
einen ersten Sensor (3), der dazu konfiguriert ist, eine Form der Innenumfangsfläche (24) zu messen, wobei der erste Sensor (3) vorzugsweise ein Abstandssensor ist, der für berührungslose Abstandsmessungen ausgelegt ist,
einen zweiten Sensor (4), der dazu konfiguriert ist, eine Form der Außenumfangsfläche (22) zu messen, wobei der zweite Sensor (4) vorzugsweise ein Abstandssensor ist, der für berührungslose Abstandsmessungen ausgelegt ist, und wobei die Messeinrichtung (1) dazu konfiguriert ist, die Form des Prüflings (2) unter Verwendung des ersten und des zweiten Sensors (3, 4) zu messen, indem sie einem spiralförmigen Messpfad folgt.

2. Messeinrichtung (1) nach Anspruch 1, wobei der erste Sensor (3) dazu konfiguriert ist, zumindest teilweise in die Innenöffnung (23) des Prüflings (2) eingeführt zu werden.

3. Messeinrichtung (1) nach einem der vorhergehenden Ansprüche, wobei die Sensoren (3, 4) optische Sensoren mit Messstrahlen mit einer Messfokusfläche mit einem Durchmesser oder einer Breite von 300 µm oder größer, vorzugsweise 500 µm oder größer, sind.

4. Messeinrichtung (1) nach einem der vorhergehenden Ansprüche, wobei die Einrichtung dazu konfiguriert ist, den Prüfling (2) so zu halten, dass in mindestens einem Betriebsmodus der erste Sensor (3) zumindest teilweise innerhalb eines durch die Innenumfangsfläche (24) begrenzten Bereichs positioniert ist und der zweite Sensor (4) um die Außenumfangsfläche (22) positioniert ist.

5. Messeinrichtung (1) nach einem der vorhergehenden Ansprüche, die eine Stütze (5) umfasst, die zum Halten des Prüflings (2) konfiguriert ist, wobei die Stütze (5) vorzugsweise eine horizontale rotierende Oberfläche (7) bereitstellt, auf die der Prüfling (2) zum Messen platziert ist, wobei die horizontale rotierende Oberfläche (7) eine Rotationsachse (8) senkrecht zu der horizontalen Oberfläche (7) umfasst.

6. Messeinrichtung (1) nach Anspruch 5, wobei die Einrichtung (1) dazu konfiguriert ist, den Prüfling (2) so auf die horizontale Oberfläche (7) zu platzieren, dass die Rotationsachse (8) und die Längsachse (21) im Wesentlichen parallel sind und die horizontale Oberfläche (7) schneiden, wobei die Schnittpunkte weniger als 1 mm, bevorzugt weniger als 0,3 mm, bevorzugter weniger als 0,1 mm voneinander beabstandet sind, wobei noch bevorzugter die Rotationsachse (8) und die Längsachse (21) zusammenfallen, wobei der erste Sensor (3) in einem Bereich oberhalb der horizontalen Oberfläche (7) positioniert ist und wobei der zweite Sensor (4) weiter von der Rotationsachse (8) beabstandet ist als der erste Sensor (3).

7. Messeinrichtung (1) nach einem der Ansprüche 5 oder 6, wobei der erste und/oder der zweite Sensor (3, 4) so montiert sind, dass sie sich vertikal relativ zu der Stütze (5) bewegen.

8. Messeinrichtung (1) nach einem der vorhergehenden Ansprüche, wobei der erste Sensor (3) so installiert ist, dass ein erster Messstrahl von dem ersten Sensor (3) in einer Richtung im Wesentlichen parallel zu der Längsachse (21) emittiert wird und/oder der erste Messstrahl in eine schräge, vorzugsweise senkrechte Richtung relativ zu der Längsachse (21) umgelenkt wird.

9. Messeinrichtung (1) nach einem der vorhergehenden Ansprüche, wobei der erste Sensor (3) einen Spiegel (9) oder eine optische Faser umfasst, wobei der erste Sensor (3) einen ersten Messstrahl emittiert und der erste Messstrahl unter Verwendung des Spiegels (9) bzw. der optischen Faser umgelenkt wird, wobei vorzugsweise
der Spiegel oder die optische Faser in Emissionsrichtung des ersten Messstrahls hinter einer Linse des ersten Sensors (3) angeordnet ist, und wobei
der Spiegel (9) oder mindestens ein Ende der optischen Faser dazu konfiguriert ist, in der Innenöffnung (23) angeordnet zu sein; und/oder
wobei der erste Messstrahl um mindestens 40°, weiter bevorzugt um mindestens 60°, noch weiter bevorzugt um mindestens 80°, abgelenkt wird.

10. Messeinrichtung (1) nach einem der vorhergehenden Ansprüche, die dazu konfiguriert ist, den Prüfling (2) zu messen, während der Prüfling (2) freistehend ist, vorzugsweise während der Prüfling (2) freistehend auf der horizontalen Oberfläche (7) ist.

11. Messeinrichtung (1) nach einem der vorhergehenden Ansprüche, wobei die Einrichtung dazu konfiguriert ist, eine Messung mittels des ersten und/oder zweiten Sensors (3, 4) durchzuführen und den relativen Rotationswinkel (ϕ₁) und die relative vertikale Position (z₁) in einem Zeitinkrement kleiner als 5 ms, vorzugsweise kleiner als 3 ms, bevorzugter kleiner als 1 ms, zu bewerten.

12. Verfahren zum Messen eines Prüflings (2), insbesondere einer Form eines Stapels (2) von Blechen, die zum Bilden eines Rotors oder eines Stators eines Elektromotors zusammengefügt sind, wobei der Prüfling (2) eine Längsachse (21), eine Außenumfangsfläche (22), die sich entlang der Längsachse (21) erstreckt, und eine Innenöffnung (23), die sich entlang der Längsachse (21) erstreckt, umfasst, wobei die Innenöffnung (23) eine Innenumfangsfläche (24) bildet, mit einer Messeinrichtung (1) nach einem der vorhergehenden Ansprüche, wobei das Verfahren die folgenden Schritte umfasst:
i) Bereitstellen eines ersten Prüflings (2), sodass der erste Sensor (3) innerhalb eines durch die Innenumfangsfläche (24) begrenzten Bereichs positioniert ist und der zweite Sensor (4) um die Außenumfangsfläche (22) positioniert ist;
ii) Erfassen mindestens eines Referenzmesspunkts;
iii) Drehen des ersten Prüflings (2) und einer Baugruppe, die den ersten und/oder den zweiten Sensor (3, 4) umfasst, relativ zueinander;
iv) Bewegen des ersten Prüflings (2) und einer Baugruppe, die den ersten und/oder zweiten Sensor (3, 4) umfasst, relativ zueinander in einer Richtung parallel zu der Längsachse (21);
v) wobei der erste und/oder der zweite Sensor (3, 4) eine Vielzahl von Messpunkten entlang eines spiralförmigen Messpfads erfassen, vorzugsweise in Zeitinkrementen von weniger als 5 ms, vorzugsweise weniger als 3 ms, bevorzugter weniger als 1 ms;
vi) Entfernen des ersten Prüflings (2).

13. Verfahren nach Anspruch 12, wobei Schritt iii), Schritt iv) und Schritt v) gleichzeitig durchgeführt werden.

14. Verfahren nach einem der Ansprüche 12 oder 13, wobei die Schritte i) bis v), vorzugsweise die Schritte i) bis vi), innerhalb von 45 Sekunden, vorzugsweise innerhalb von 30 Sekunden, durchgeführt werden.

## Revendications

1. Appareil de mesure (1) destiné à mesurer une éprouvette (2), en particulier une forme d'empilement (2) de feuilles assemblées pour former un rotor ou un stator d'un moteur électrique, l'éprouvette (2) comprenant un axe longitudinal (21), une surface périphérique externe (22) s'étendant le long de l'axe longitudinal (21) et une ouverture interne (23) s'étendant le long de l'axe longitudinal (21), l'ouverture interne (23) formant une surface périphérique interne (24), l'appareil (1) comprenant :
un premier capteur (3) configuré pour mesurer une forme de la surface périphérique interne (24), le premier capteur (3) étant de préférence un capteur de distance conçu pour des mesures de distance sans contact,
un deuxième capteur (4) configuré pour mesurer une forme de la surface périphérique externe (22), le deuxième capteur (4) étant de préférence un capteur de distance conçu pour des mesures de distance sans contact, et
l'appareil de mesure (1) étant configuré pour mesurer la forme de l'éprouvette (2) au moyen des premier et deuxième capteurs (3, 4) en suivant une trajectoire de mesure hélicoïdale.

2. Appareil de mesure (1) selon la revendication 1, dans lequel le premier capteur (3) est configuré pour être au moins partiellement introduit dans l'ouverture interne (23) de l'éprouvette (2).

3. Appareil de mesure (1) selon l'une quelconque des revendications précédentes, dans lequel les capteurs (3, 4) sont des capteurs optiques avec des faisceaux de mesure ayant une zone focale de mesure avec un diamètre ou une largeur de 300 µm ou plus, de préférence 500 µm ou plus.

4. Appareil de mesure (1) selon l'une quelconque des revendications précédentes, l'appareil étant configuré pour maintenir l'éprouvette (2) de telle sorte que dans au moins un mode de fonctionnement, le premier capteur (3) soit au moins partiellement positionné à l'intérieur d'une zone délimitée par la surface périphérique interne (24) et le deuxième capteur (4) soit positionné autour de la surface périphérique externe (22).

5. Appareil de mesure (1) selon l'une quelconque des revendications précédentes comprenant un support (5) configuré pour maintenir l'éprouvette (2), le support (5) fournissant de préférence une surface de rotation horizontale (7) sur laquelle l'éprouvette (2) est placée pour la mesure, la surface de rotation horizontale (7) comprenant un axe de rotation (8) perpendiculaire à la surface horizontale (7).

6. Appareil de mesure (1) selon la revendication 5, l'appareil (1) étant configuré pour que l'éprouvette (2) soit placée sur la surface horizontale (7) de telle sorte que l'axe de rotation (8) et l'axe longitudinal (21) soient sensiblement parallèles et coupent la surface horizontale (7) avec les points d'intersection espacés de moins de 1 mm, de préférence moins de 0,3 mm, mieux moins de 0,1 mm, mieux encore avec l'axe de rotation (8) et l'axe longitudinal (21) qui coïncident, le premier capteur (3) étant positionné dans une zone au-dessus de la surface horizontale (7), et le deuxième capteur (4) étant plus éloigné de l'axe de rotation (8) que le premier capteur (3).

7. Appareil de mesure (1) selon l'une quelconque des revendications 5 et 6, dans lequel les premier et/ou deuxième capteurs (3, 4) sont montés pour se déplacer verticalement par rapport au support (5).

8. Appareil de mesure (1) selon l'une quelconque des revendications précédentes, dans lequel le premier capteur (3) est installé de telle sorte qu'un premier faisceau de mesure est émis par le premier capteur (3) dans une direction sensiblement parallèle à l'axe longitudinal (21) et/ou que le premier faisceau de mesure est redirigé dans une direction oblique, de préférence perpendiculaire à l'axe longitudinal (21).

9. Appareil de mesure (1) selon l'une quelconque des revendications précédentes, dans lequel le premier capteur (3) comprend un miroir (9) ou une fibre optique, dans lequel le premier capteur (3) émet un premier faisceau de mesure et le premier faisceau de mesure est redirigé au moyen du miroir (9) ou de la fibre optique, respectivement, de préférence dans lequel
le miroir ou la fibre optique est disposé dans la direction d'émission du premier faisceau de mesure après une lentille du premier capteur (3) et dans lequel
le miroir (9) ou au moins une extrémité de la fibre optique est configuré pour être disposé dans l'ouverture interne (23) ; et/ou
dans lequel le premier faisceau de mesure est dévié d'au moins 40°, mieux d'au moins 60°, mieux encore d'au moins 80°.

10. Appareil de mesure (1) selon l'une quelconque des revendications précédentes, configuré pour mesurer l'éprouvette (2) pendant que l'éprouvette (2) tient toute seule, de préférence pendant que l'éprouvette (2) tient toute seule sur la surface horizontale (7).

11. Appareil de mesure (1) selon l'une quelconque des revendications précédentes, l'appareil étant configuré pour effectuer une mesure par le biais du premier et/ou du deuxième capteur (3, 4) et pour évaluer l'angle de rotation relatif (ϕ₁) et la position verticale relative (z₁) dans un incrément de temps inférieur à 5 ms, de préférence inférieur à 3 ms, mieux encore inférieur à 1 ms.

12. Procédé destiné à mesurer une éprouvette (2), en particulier une forme d'empilement (2) de feuilles assemblées pour former un rotor ou un stator d'un moteur électrique, l'éprouvette (2) comprenant un axe longitudinal (21), une surface périphérique externe (22) s'étendant le long de l'axe longitudinal (21) et une ouverture interne (23) s'étendant le long de l'axe longitudinal (21), l'ouverture interne (23) formant une surface périphérique interne (24), avec un appareil de mesure (1) selon l'une quelconque des revendications précédentes, le procédé comprenant les étapes suivantes :
i) mise en place d'une première éprouvette (2) de telle sorte que le premier capteur (3) soit positionné à l'intérieur d'une zone délimitée par la surface périphérique interne (24) et le deuxième capteur (4) soit positionné autour de la surface périphérique externe (22) ;
ii) prise d'au moins un point de mesure de référence ;
iii) rotation de la première éprouvette (2) et d'un ensemble comprenant le premier et/ou le deuxième capteur (3, 4) l'un par rapport à l'autre ;
iv) déplacement de la première éprouvette (2) et d'un ensemble comprenant le premier et/ou le deuxième capteur (3, 4) l'un par rapport à l'autre dans une direction parallèle à l'axe longitudinal (21) ;
v) le premier et/ou le deuxième capteur (3, 4) prenant une pluralité de points de mesure le long d'une trajectoire de mesure hélicoïdale, de préférence dans des incréments de temps inférieurs à 5 ms, de préférence inférieurs à 3 ms, mieux encore inférieurs à 1 ms ;
vi) retrait de la première éprouvette (2).

13. Procédé selon la revendication 12, dans lequel l'étape iii), l'étape iv) et l'étape v) sont effectuées simultanément.

14. Procédé selon l'une quelconque des revendications 12 et 13, dans lequel les étapes i) à v), de préférence les étapes i) à vi) sont effectuées en moins de 45 secondes, de préférence en moins de 30 secondes.
